# EUROPÄISCHE PATENTSCHRIFT

(11) **EP 3 734 937 B1**
(45) Veröffentlichungstag und Bekanntmachung des Hinweises auf die Patenterteilung: **18.06.2025**
(21) Anmeldenummer: 20163400.3
(22) Anmeldetag: 16.03.2020
(51) Int. Cl.: H04L 67/12

(54) **ANBINDEN EINES ZUBEHÖRGERÄTS IN EINEM FAHRZEUG**
CONNECTING AN ACCESSORY DEVICE IN A VEHICLE
CONNECTER UN APPAREIL ACCESSOIRE DANS UN VÉHICULE

(30) Priorität: 29.04.2019 DE 102019206135
(43) Veröffentlichungstag der Anmeldung: 04.11.2020
(73) Patentinhaber: Volkswagen Aktiengesellschaft, 38440 Wolfsburg (DE)
(72) Erfinder: Theimer, Wolfgang, 44879 Bochum (DE)

(56) Entgegenhaltungen:
- DE-A1- 10 134 717
- DE-A1- 102013 113 801
- DE-A1- 102016 112 908
- DE-A1- 102016 116 168
- DE-A1- 102017 200 654
- DE-A1- 102018 204 527
- US-A1- 2017 053 460

## Beschreibung

Die vorliegende Erfindung bezieht sich auf eine Vorrichtung, ein Verfahren und ein Computerprogramm zum Anbinden eines Zubehörgeräts in einem Fahrzeug, und auf ein Verfahren, eine Vorrichtung und ein Computerprogramm für einen Server.

Viele neue Funktionen im Fahrzeug erfordern eine Installation von intelligenter Technik mit Sensoren, Aktoren und einer zugehörigen Informationsverarbeitung. Häufig werden diesen neuen Features nicht im Fahrzeug selbst umgesetzt, weil die Nutzungsrate für eine eigene Entwicklung oder die Ausstattung mit einer Fremdlösung zu gering ist. Ebenso entstehen solche Ideen auch während das Fahrzeug schon im Verkauf ist und eine Nachrüstung schwierig ist. Beispielsweise können Fahrzeuge für einen Empfang von Paketen genutzt werden. Ein Zustellbote liefert ein Paket an den eigenen Wagen und erhält eine einmalige Genehmigung, den Kofferraum zu öffnen und das Paket dort abzulegen. Natürlich ist es denkbar, dass nicht nur eine Lieferung, sondern mehrere Lieferungen während eines Tages dort abgelegt werden. Fehlersituationen wie etwa keine Paketablage nach Öffnen des Kofferraums oder Entnahme anderer Gegenstände bei Öffnen des Kofferraums können möglicherweise nicht erkannt werden und führen gegebenenfalls zur Skepsis des Benutzers gegenüber diesem ansonsten interessanten Dienst. Dies lässt sich dadurch vermeiden, dass der Beladevorgang im Kofferraum durch eine (nachgerüstete) Kamera gefilmt wird und mit dem Protokoll der Zustellung dem Benutzer geschickt wird. Die Kamera alleine kann ggfs. Videos aufnehmen und speichern (wenn an eine Stromversorgung angeschlossen), weiß aber nicht, wann die Aufnahme durchgeführt werden soll (nur bei einer durch den Benutzer autorisierten Öffnung des Kofferraums durch den Zusteller. Ebenso ist das Versenden des Videos durch die Kamera selbst (mit einem eigenen Funkmodul) sehr aufwändig und könnte besser durch die Online-Unit des Fahrzeugs erfolgen.

Die Patentschrift DE 101 34717 A1 beschreibt ein Verfahren zur Konfiguration eines Informationssystems in einem Verkehrsmittel und eine Anordnung zur Durchführung des Verfahrens. Patentveröffentlichung DE 10 2016 116 168 A1 lehrt ein Verfahren zum Bereitstellen von sensorbasierten Fahrzeugfunktionen in einem Kraftfahrzeug sowie Kraftfahrzeug-Recheneinrichtung und Kraftfahrzeug.

US-Patentschrift US 10,127,795 B1 beschreibt ein System und Verfahren zum Entdecken von Gegenständen die von Transportunternehmen in Fahrzeugen hinterlassen wurden. Dabei werden eine Mehrzahl von Sensoren, wie etwa Kamerasensoren, genutzt, um die Gegenstände zu entdecken. Auch andere Schriften befassen sich mit der Sicherheit von Zugängen zu einem Fahrzeug. So offenbart Internationale Patentanmeldung WO 2018/204251 ein System zum Empfangen von Waren an einem Fahrzeug, in dem verschiedene Mittel eingesetzt werden, um einen Zugang zum Fahrzeug abzusichern. Darüber hinaus offenbart Internationale Patentanmeldung WO 2018/171939 A1 ein Verfahren und System zum Bereitstellen des Zugangs zu einem Ort, der durch einen elektrisch aktivierten Verriegelungsmechanismus gesichert ist. Dabei wird eine Position eines Mobilgeräts mit einem Ort verglichen, und der Verriegelungsmechanismus basierend auf dem Vergleich ausgelöst.

Es besteht daher ein Bedarf einer verbesserten Anbindung von Zubehörgeräten in einem Fahrzeug.

Diesem Bedarf wird durch die Gegenstände der unabhängigen Ansprüche Rechnung getragen.

Ausführungsbeispiele basieren auf der Erkenntnis, dass Computersysteme eines Fahrzeugs aufgrund von Sicherheitsvorgaben und Kompatibilitätsanforderungen neue Zubehörgeräte häufig nicht direkt unterstützen können und auch eine Installation entsprechender Erweiterungen meist nicht möglich ist. Daher kann in Ausführungsbeispielen das Zubehörgerät nicht direkt von einem Computersystem des Fahrzeugs betrieben werden, sondern ein Server, etwa ein Cloud-basierter Dienst (von Cloud Computing, wörtliche Übersetzung Rechnerwolke), kann als Zwischenschicht genutzt werden, der entweder direkt die Funktionen des Zubehörgeräts nutzbar macht (etwa über eine standardisierte Schnittstelle) oder dem Fahrzeug diejenigen Informationen bereitstellt (etwa Datenkonversionsinformationen oder Informationen über genutzte Datenformate) die es dem Fahrzeug ermöglicht, das Zubehörgerät einzubinden.

Ausführungsbeispiele schaffen ein Verfahren zum Anbinden eines Zubehörgeräts in einem Fahrzeug. Das Verfahren umfasst ein Empfangen von Datenkommunikation von dem Zubehörgerät durch ein Kommunikationsgerät des Fahrzeugs über eine erste Datenkommunikationsverbindung. Das Verfahren umfasst ferner ein Weiterleiten der Datenkommunikation des Zubehörgeräts durch das Kommunikationsgerät zu einem Server über eine zweite Datenkommunikationsverbindung. Das Verfahren umfasst ferner ein Empfangen von Steuerinformationen für das Zubehörgerät durch das Kommunikationsgerät von dem Server über die zweite Datenkommunikationsverbindung. Die Steuerinformationen umfassen Anbindungsparameter für die Anbindung des Zubehörgeräts im Fahrzeug. Das Verfahren umfasst ferner ein Anbinden des Zubehörgeräts in dem Fahrzeug basierend auf der Steuerinformation. Durch das Weiterleiten der Datenkommunikation wird eine vereinfachte Anbindung des Zubehörgeräts im Fahrzeug ermöglicht, etwa ohne Betriebsmittel des Fahrzeugs verändern oder erweitern zu müssen.

Das Verfahren umfasst ferner ein Empfangen von zu verarbeitenden Daten, wobei die zu verarbeitenden Daten Sensordaten des Zubehörgeräts und/oder Aktordaten des Zubehörgeräts oder für das Zubehörgerät umfassen, von dem Zubehörgerät über die erste Datenkommunikationsverbindung. Das Verfahren umfasst ferner ein Weiterleiten der zu verarbeitenden Daten zu dem Server über die zweite Datenkommunikationsverbindung, um eine Verarbeitung der zu verarbeitenden Daten durch den Server zu bewirken.

Dies ermöglicht die Verarbeitung von Nutzdaten des Zubehörgeräts durch den Server, etwa um eine Anpassung der Betriebsmittel des Fahrzeugs zu vermeiden.

Das Verfahren kann ferner ein Empfangen einer verarbeiteten Fassung der zu verarbeitenden Daten von dem Server über die zweite Datenkommunikationsverbindung umfassen. Dies ermöglicht die Nutzung der verarbeiteten Sensor/Aktordaten im Fahrzeug.

Beispielsweise kann das Verfahren ferner ein Weiterleiten einer verarbeiteten Fassung der zu verarbeitenden Daten an das Zubehörgerät über die erste Datenkommunikationsverbindung umfassen. So kann das Zubehörgerät basierend auf der verarbeiteten Fassung der jeweiligen Daten gesteuert werden.

Alternativ oder zusätzlich kann die verarbeitete Fassung der zu verarbeitenden Daten durch das Fahrzeug verwendet oder an weitere Geräte weitergeleitet werden. So kann das Verfahren ferner ein Nutzen einer verarbeiteten Fassung der zu verarbeitenden Daten durch das Fahrzeug umfassen. Die Nutzung kann auf den Anbindungsparametern basieren. Alternativ oder zusätzlich kann das Verfahren ein Anzeigen einer verarbeiteten Fassung der zu verarbeitenden Daten über eine Anzeigeeinheit des Fahrzeugs und/oder ein Weiterleiten einer verarbeiteten Fassung der zu verarbeitenden Daten an ein weiteres Gerät umfassen. Dies ermöglicht die Nutzung des Zubehörgeräts durch das Fahrzeug oder deren Insassen.

In manchen Ausführungsbeispielen kann das Verfahren ferner ein Übermitteln von Fahrzeugdaten an den Server umfassen. Die verarbeitete Fassung der zu verarbeitenden Daten kann ferner auf den übermittelten Fahrzeugdaten basieren. Dies ermöglicht eine Fusion der Datensätze durch den Server.

Alternativ oder zusätzlich können die zu verarbeitenden Daten durch das Fahrzeug verarbeitet werden. So kann das Verfahren das Empfangen von zu verarbeitenden Daten von dem Zubehörgerät über die erste Datenkommunikationsverbindung umfassen. Das Verfahren kann ferner ein Verarbeiten der zu verarbeitenden Daten durch das Fahrzeug basierend auf den Anbindungsparametern. Dies ermöglicht eine lokale Verarbeitung der Daten, was eine benötigte Übertragungskapazität zwischen Fahrzeug und Server reduziert.

Beispielsweise kann die Verarbeitung durch das Fahrzeug einer Vorverarbeitung entsprechen. Das Verfahren kann ein Übermitteln der vorverarbeiteten zu verarbeitenden Daten durch das Kommunikationsgerät an den Server über die zweite Datenkommunikationsverbindung, um eine Verarbeitung der vorverarbeiteten zu verarbeitenden Daten durch den Server zu bewirken. Dies ermöglicht gegebenenfalls eine Datenübertragung, die eine geringere Übertragungskapazität benötigt, oder eine Reduzierung der Latenz der Verarbeitung.

Beispielsweise kann die Verarbeitung durch das Fahrzeug ferner auf Fahrzeugdaten des Fahrzeugs basieren. Dies ermöglicht eine Fusion der Datensätze durch das Fahrzeug.

In manchen Ausführungsbeispielen umfassen die Anbindungsparameter eine Information über Zugriffsberechtigungen für das Zubehörgerät. Die Anbindung des Zubehörgeräts kann auf der Information über die Zugriffsberechtigungen basieren. Durch die Zugriffsberechtigungen kann definiert sein, mit welchen anderen Geräten der Komponenten des Fahrzeugs das Zubehörgerät kommunizieren kann.

Beispielsweise kann die erste Datenkommunikationsverbindung einer Nahfunkkommunikationsverbindung entsprechen. Die zweite Datenkommunikationsverbindung kann einer Verbindung über ein zelluläres Mobilkommunikationssystem entsprechen.

In einigen Ausführungsbeispielen kann das Verfahren ferner ein Bereitstellen einer Befestigung und/oder einer Stromversorgung für das Zubehörgerät umfassen. Die Befestigung kann beispielsweise einer magnetischen Befestigung entsprechen. Die Stromversorgung kann auf einer induktiven Energieübertragung basiert. Dies ermöglicht ein Anbringen des Zubehörgeräts ohne, dass entsprechende Schnittstellen oder Befestigungselemente von außen sichtbar sind.

Ausführungsbeispiele schaffen ferner ein Verfahren für einen Server. Das Verfahren umfasst ein Empfangen einer Datenkommunikation eines Zubehörgeräts für ein Fahrzeug von einem Kommunikationsgerät des Fahrzeugs über eine Datenkommunikationsverbindung. Die Datenkommunikation stammt von dem Zubehörgerät und ist von dem Kommunikationsgerät weitergeleitet. Das Verfahren umfasst ferner ein Bestimmen von Anbindungsparametern für eine Anbindung des Zubehörgeräts in dem Fahrzeug basierend auf der Datenkommunikation. Das Verfahren umfasst ferner ein Übermitteln von Steuerinformationen für das Zubehörgerät an das Kommunikationsgerät über die Datenkommunikationsverbindung. Die Steuerinformationen umfassen die Anbindungsparameter für die Anbindung des Zubehörgeräts im Fahrzeug. Der Server kann mit diesem Verfahren genutzt werden, um die Anbindung des Zubehörgeräts in dem Fahrzeug zu ermöglichen. Das Verfahren umfasst ferner das Empfangen von zu verarbeitenden Daten des Zubehörgeräts von dem Kommunikationsgerät des Fahrzeugs, wobei die zu verarbeitenden Daten Sensordaten des Zubehörgeräts und/oder Aktordaten des Zubehörgeräts oder für das Zubehörgerät umfassen, und das Verarbeiten der zu verarbeitenden Daten, und das Übermitteln einer verarbeiteten Fassung der zu verarbeitenden Daten zu dem Kommunikationsgerät des Fahrzeugs über die Datenkommunikationsverbindung.

In manchen Ausführungsbeispielen umfasst das Verfahren ferner ein Empfangen von zu verarbeitenden Daten des Zubehörgeräts von dem Kommunikationsgerät des Fahrzeugs, ein Verarbeiten der zu verarbeitenden Daten, und ein Übermitteln einer verarbeiteten Fassung der zu verarbeitenden Daten zu dem Kommunikationsgerät des Fahrzeugs über die Datenkommunikationsverbindung. So kann das Zubehörgerät im Fahrzeug verwendet werden, selbst wenn das Fahrzeug selbst die Daten des Zubehörgeräts nicht verarbeiten kann.

Das Verfahren kann ferner ein Empfangen von Fahrzeugdaten des Fahrzeugs von dem Kommunikationsgerät umfassen. Das Verarbeiten der zu verarbeitenden Daten kann auf den Fahrzeugdaten basieren. Dies ermöglicht eine Verquickung der Fahrzeugdaten und der Daten des Zubehörgeräts.

Ausführungsbeispiele schaffen ferner ein Programm mit einem Programmcode zum Durchführen zumindest eines der Verfahren, wenn der Programmcode auf einem Computer, einem Prozessor, einem Kontrollmodul oder einer programmierbaren Hardwarekomponente ausgeführt wird.

Ausführungsbeispiele schaffen ferner ein Kommunikationsgerät für ein Fahrzeug. Das Kommunikationsgerät umfasst eine erste Schnittstelle zur Datenkommunikation mit einem Zubehörgerät für das Fahrzeug über eine erste Datenkommunikationsverbindung. Das Kommunikationsgerät umfasst eine zweite Schnittstelle zur Datenkommunikation mit einem Server über eine zweite Datenkommunikationsverbindung. Das Kommunikationsgerät umfasst ein Kontrollmodul ausgebildet zum Empfangen von Datenkommunikation von dem Zubehörgerät über die erste Schnittstelle. Das Kontrollmodul ist ausgebildet zum Weiterleiten der Datenkommunikation des Zubehörgeräts zu dem Server über die zweite Schnittstelle. Das Kontrollmodul ist ausgebildet zum Empfangen von Steuerinformationen für das Zubehörgerät von dem Server über die zweite Schnittstelle. Die Steuerinformationen umfassen Anbindungsparameter für die Anbindung des Zubehörgeräts im Fahrzeug. Das Kontrollmodul ist ausgebildet zum Nutzen der Anbindungsparameter, um das Zubehörgerät an dem Fahrzeug anzubinden. Das Kommunikationsgerät umfasst ferner das Empfangen von zu verarbeitenden Daten von dem Zubehörgerät über die erste Schnittstelle, wobei die zu verarbeitenden Daten Sensordaten des Zubehörgeräts und/oder Aktordaten des Zubehörgeräts oder für das Zubehörgerät umfassen, und das Weiterleiten der zu verarbeitenden Daten zu dem Server über die zweite Schnittstelle, um eine Verarbeitung der zu verarbeitenden Daten durch den Server zu bewirken.

Ausführungsbeispiele schaffen ferner eine Vorrichtung für einen Server. Die Vorrichtung umfasst eine Schnittstelle zur Kommunikation mit einem Kommunikationsgerät eines Fahrzeugs über eine Datenkommunikationsverbindung. Die Vorrichtung umfasst ferner ein Kontrollmodul ausgebildet zum Empfangen einer Datenkommunikation eines Zubehörgeräts für das Fahrzeug von dem Kommunikationsgerät des Fahrzeugs über die Datenkommunikationsverbindung. Die Datenkommunikation stammt von dem Zubehörgerät und ist von dem Kommunikationsgerät weitergeleitet. Das Kontrollmodul ist ausgebildet zum Bestimmen von Anbindungsparametern für eine Anbindung des Zubehörgeräts in dem Fahrzeug basierend auf der Datenkommunikation. Das Kontrollmodul ist ausgebildet zum Übermitteln von Steuerinformationen für das Zubehörgerät an das Kommunikationsgerät über die Datenkommunikationsverbindung. Die Steuerinformationen umfassen die Anbindungsparameter für die Anbindung des Zubehörgeräts im Fahrzeug. Die Vorrichtung umfassst ferner das Empfangen von zu verarbeitenden Daten des Zubehörgeräts von dem Kommunikationsgerät des Fahrzeugs, wobei die zu verarbeitenden Daten Sensordaten des Zubehörgeräts und/oder Aktordaten des Zubehörgeräts oder für das Zubehörgerät umfassen, das Verarbeiten der zu verarbeitenden Daten, und das Übermitteln einer verarbeiteten Fassung der zu verarbeitenden Daten zu dem Kommunikationsgerät des Fahrzeugs über die Datenkommunikationsverbindung.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
- Fign. 1a und 1b: zeigen Flussdiagramme von Ausführungsbeispielen eines Verfahrens zum Anbinden eines Zubehörgeräts in einem Fahrzeug;
- Fig. 1c: zeigt ein Blockdiagramm eines Ausführungsbeispiels eines Kommunikationsgeräts fürein Fahrzeug;
- Fig. 2a: zeigt ein Flussdiagramm eines Ausführungsbeispiels eines Verfahrens für einen Server;
- Fig. 2b: zeigt ein Blockdiagramm eines Ausführungsbeispiels einer Vorrichtung für einen Server;
- Fig. 3: zeigt ein Blockdiagramm einer Systemarchitektur für einen Datenfluss einer serverbasierten Anbindung von Fahrzeugzubehör; und
- Fig. 4: zeigt eine Tabelle einer Zugriffskontrollmatrix.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen '' einer," '' eine", ''eines " und ''der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

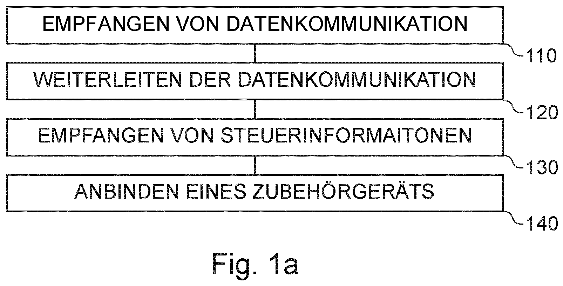

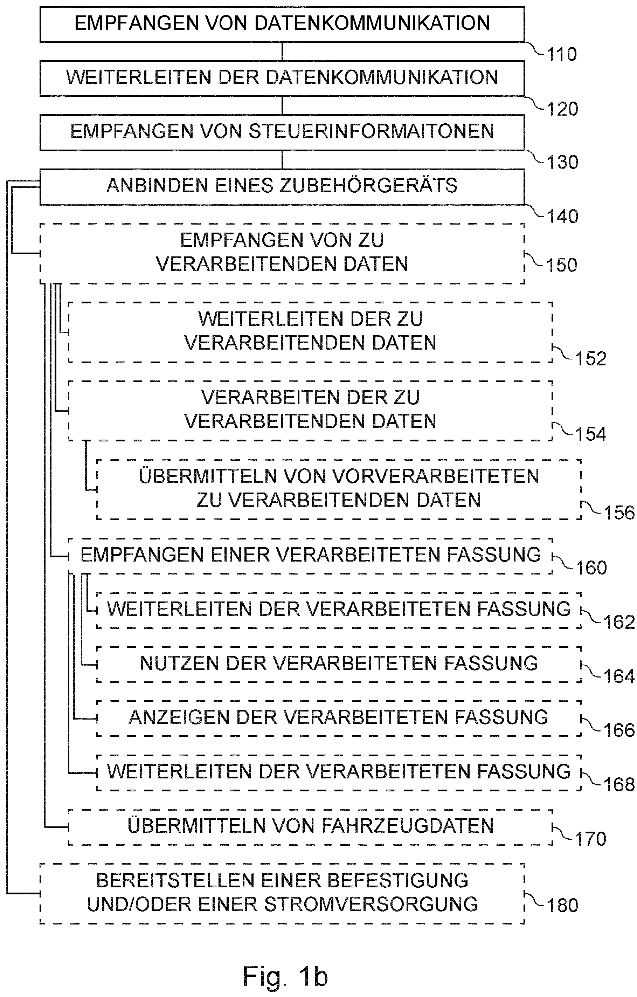

Fign. 1a und 1b zeigen Flussdiagramme von Ausführungsbeispielen eines Verfahrens zum Anbinden eines Zubehörgeräts 30 in einem Fahrzeug 100. Das Verfahren umfasst ein Empfangen 110 von Datenkommunikation von dem Zubehörgerät 30 durch ein Kommunikationsgerät 10 des Fahrzeugs 100 über eine erste Datenkommunikationsverbindung. Das Verfahren umfasst ferner ein Weiterleiten 120 der Datenkommunikation des Zubehörgeräts 30 durch das Kommunikationsgerät 10 zu einem Server 200 über eine zweite Datenkommunikationsverbindung. Das Verfahren umfasst ferner ein Empfangen 130 von Steuerinformationen für das Zubehörgerät 30 durch das Kommunikationsgerät 10 von dem Server 200 über die zweite Datenkommunikationsverbindung. Die Steuerinformationen umfassen Anbindungsparameter für die Anbindung des Zubehörgeräts 30 im Fahrzeug 100. Das Verfahren umfasst ferner ein Anbinden 140 des Zubehörgeräts 30 in dem Fahrzeug 100 basierend auf der Steuerinformation. Beispielsweise kann das Verfahren von dem Kommunikationsgerät 10 des Fahrzeugs 100 ausgeführt werden.

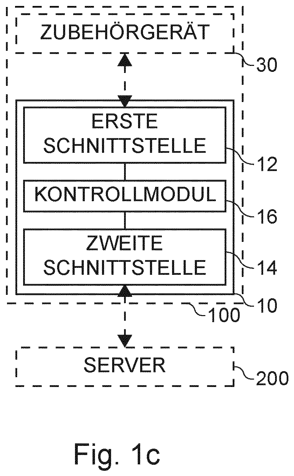

Fig. 1c zeigt ein Blockdiagramm eines Ausführungsbeispiels eines (entsprechenden) Kommunikationsgeräts 10 für ein Fahrzeug 100. Das Kommunikationsgerät 10 umfasst eine erste Schnittstelle 12 zur Datenkommunikation mit einem Zubehörgerät 30 für das Fahrzeug 100 über eine erste Datenkommunikationsverbindung. Das Kommunikationsgerät 10 umfasst eine zweite Schnittstelle 14 zur Datenkommunikation mit einem Server 200 über eine zweite Datenkommunikationsverbindung. Das Kommunikationsgerät umfasst ferner ein Kontrollmodul 16, das mit der ersten Schnittstelle 12 und der zweiten Schnittstelle 14 gekoppelt ist. Das Kontrollmodul 16 ist beispielsweise ausgebildet, um das Verfahren der Fig. 1a oder 1b auszuführen, etwa im Zusammenspiel mit den beiden Schnittstellen. Beispielsweise ist das Kontrollmodul 16 ausgebildet zum Empfangen von Datenkommunikation von dem Zubehörgerät 30 über die erste Schnittstelle 12. Das Kontrollmodul 16 ist ausgebildet zum Weiterleiten der Datenkommunikation des Zubehörgeräts 30 zu dem Server 200 über die zweite Schnittstelle 14. Das Kontrollmodul 16 ist ausgebildet zum Empfangen von Steuerinformationen für das Zubehörgerät 30 von dem Server 200 über die zweite Schnittstelle 14. Die Steuerinformationen umfassen Anbindungsparameter für die Anbindung des Zubehörgeräts 30 im Fahrzeug 100, Das Kontrollmodul 16 ist ausgebildet zum Nutzen der Anbindungsparameter, um das Zubehörgerät 30 an dem Fahrzeug 100 anzubinden 100. Fig. 1c zeigt ferner das Fahrzeug 100 umfassend das Kommunikationsgerät 10. Das Fahrzeug 100 kann ferner das Zubehörgerät 30 umfassen.

Zumindest manche Ausführungsbeispielen befassen sich mit einem Verfahren und einem Computerprogramm zum Anbinden eines Zubehörgeräts 30 in einem Fahrzeug 100, sowie auf ein entsprechendes Kommunikationsgerät des Fahrzeugs, das ausgebildet ist, um ein entsprechendes Verfahren und/oder Computerprogramm auszuführen. Dabei kann das Kommunikationsgerät etwa einer Komponente des Fahrzeugs entsprechen, die ausgebildet ist, um über die zweite Datenkommunikationsverbindung zu kommunizieren, also etwa ein Protokollumsetzer (auch engl. Gateway), oder ein zentraler Rechner des Fahrzeugs, das mit einem Protokollumsetzer oder einer entsprechenden Kommunikationsmodul gekoppelt ist. Sowohl der zentrale Rechner, das Kommunikationsgerät und der Protokollumsetzer können im Allgemeinen von einem (logischen) Computersystem des Fahrzeugs umfasst sein. Das Computersystem des Fahrzeugs kann dabei eine Mehrzahl von Komponenten umfassen, wie etwa den zentralen Rechner, das Kommunikationsgerät und/oder den Protokollumsetzer, die untereinander vernetzt sein können.

Das Verfahren, das Kommunikationsgerät und das Computerprogramm sind dazu ausgelegt, das Zubehörgerät 30 in dem Fahrzeug 100 anzubinden. Dabei umfasst die Anbindung zumindest einmal, dass eine Funktionalität des Zubehörgeräts Insassen des Fahrzeugs zur Verfügung steht, etwa über eine Anzeigeeinheit des Fahrzeugs, oder durch die reine Funktionalität des Zubehörgeräts selbst. Dabei arbeitet das Zubehörgerät im Zusammenspiel mit dem Computersystem des Fahrzeugs, d.h. zumindest eine Kommunikation des Zubehörgeräts erfolgt über das Computersystem des Fahrzeugs oder eine Funktionalität des Zubehörgeräts wird über eine Bedieneinheit, die mit dem Computersystem gekoppelt ist, gesteuert, von dem Computersystem genutzt, oder auf einer Anzeigeeinheit, die mit dem Computersystem gekoppelt ist, dargestellt. Dabei kann das Zubehörgerät beispielsweise eine Kamera zur Überwachung eines Kofferraums des Fahrzeugs sein. Alternativ kann das Zubehörgerät ein beliebiges Gerät sein, das mit dem Fahrzeug oder über das Fahrzeug interagiert, etwa ein Radioempfangsmodul für einen zuvor durch das Fahrzeug nicht unterstützten Radiostandard, ein Fernsehempfangsmodul, eine Rückfahrkamera, eine Abstandsmesseinrichtung, eine Dashcam (Kofferwort aus dashboard (engl. für Armaturenbrett) und camera (Kamera), eine Action Cam (eine Kamera, die gegen Umwelteinflüsse geschützt ist), eine beheizte Sitzauflage, eine externe Recheneinheit (auch engl. Compute Unit), oder ein zusätzlicher Bildschirm für eine Rückbank des Fahrzeugs etc.

Zusätzlich zur logischen Anbindung kann auch eine elektrische Anbindung und/oder eine Befestigung des Zubehörgeräts erfolgen. In anderen Worten kann das Verfahren ferner ein Bereitstellen 180 einer Befestigung und/oder einer Stromversorgung für das Zubehörgerät 30 umfassen. Dabei kann die Befestigung beispielsweise einer magnetischen Befestigung entsprechen, etwa über ein oder mehrere Magnete in dem Zubehörgerät, ein oder mehrere Magnete in einem Innenraum des Fahrzeugs, und/oder ein oder mehrere Magnete in einer Fahrzeugkarosserie des Fahrzeugs. Alternativ kann eine mechanische Verbindung verwendet werden. Die Stromversorgung kann beispielsweise auf einer induktiven Energieübertragung (oder auf einem anderen drahtlosen Energieübertragungsverfahren) basieren. Alternativ kann hier eine Kabelverbindung verwendet werden.

Das Verfahren umfasst das Empfangen 110 der Datenkommunikation von dem Zubehörgerät 30 durch das Kommunikationsgerät 10 des Fahrzeugs 100 über die erste Datenkommunikationsverbindung. Dabei kann die Datenkommunikation etwa dazu ausgelegt sein, die Anbindung des Zubehörgeräts zu initialisieren. Dabei kann die Datenkommunikation beispielsweise zumindest einen Identifikator des Zubehörgeräts umfassen, etwa einen Identifikator für einen Typ des Zubehörgeräts oder eine eindeutige Kennung des Zubehörgeräts. In zumindest manchen Ausführungsbeispielen kann die Datenkommunikation eine fahrzeuginterne Adressierung des Zubehörgeräts umfassen, etwa um dem Server zu ermöglichen, eine weitere Datenkommunikation an das Zubehörgerät (über das Kommunikationsgerät) zu richten. Die erste Datenkommunikationsverbindung kann in Ausführungsbeispielen beispielsweise einer Nahfunkkommunikationsverbindung entsprechen, etwa einer Bluetooth-basierten Nahfunkkommunikationsverbindung, einer Near Field Communication (NFC, Nahfeldkommunikation)-basierten Nahfunkkommunikationsverbindung, oder einer Wireless Local Area Network (WLAN, Drahtloses lokales Netzwerk)-basierten Nahfunkkommunikationsverbindung. Alternativ kann die erste Datenkommunikationsverbindung einer drahtgebundenen Datenkommunikationsverbindung entsprechen, etwa über Ethernet oder über einen Fahrzeugbus.

Das Verfahren umfasst ferner das Weiterleiten 120 der Datenkommunikation des Zubehörgeräts 30 durch das Kommunikationsgerät 10 zu dem Server 200 über die zweite Datenkommunikationsverbindung. Dabei kann die Datenkommunikation in manchen Ausführungsbeispielen unverändert weitergeleitet werden. Alternativ kann die Datenkommunikation durch das Kommunikationsgerät 10 entpackt, umgewandelt oder ergänzt werden und in überarbeiteter Fassung an den Server 200 übermittelt werden. Dabei kann die zweite Datenkommunikationsverbindung beispielsweise einer Verbindung über ein zelluläres Mobilkommunikationssystem entsprechen. Das zelluläre Mobilkommunikationssystem kann beispielsweise einem zellulären Mobilkommunikationssystem der Gruppe von Global System for Mobile telecommunications (GSM), General Packet Radio Service (GPRS), Enhanced Data rates for GSM Evolution (EDGE), Universal Mobile Telecommunication System (UMTS), Long Term Evolution (LTE), Long Term Evolution Advanced (LTE-A), und ein Mobilfunksystem der 5. Generation (5G) entsprechen. Der Server, wörtliche Übersetzung ''Dienstrechner" ist dabei ein allgemeiner Begriff, der nicht auf die dingliche Entität abstellt. Unter dem Begriff Server können auch äquivalente Vorrichtungen verstanden werden, wie etwa virtuelle Maschinen oder Server in einem Rechenzentrum, Applikationen, die in einem Software as a Service (SaaS, Software als Dienst)-Szenario bereitgestellt werden, eine Mehrzahl von Servern, die zusammenwirken um die Funktionalität des Servers 200 bereitzustellen etc.

Das Verfahren umfasst ferner das Empfangen 130 der Steuerinformationen für das Zubehörgerät 30 durch das Kommunikationsgerät 10 von dem Server 200 über die zweite Datenkommunikationsverbindung. Beispielsweise können die Steuerinformationen von Nutzlastinformationen abzugrenzen sein, d.h. die Steuerinformationen können Informationen umfassen, die zum Steuern einer Funktionalität des Kommunikationsgeräts 10, des Computersystems des Fahrzeugs oder des Zubehörgeräts geeignet sind. In anderen Worten können die Steuerinformationen Steueranweisungen für das Kommunikationsgerät 10, das Computersystem des Fahrzeugs oder das Zubehörgerät 30 umfassen. Die Steuerinformationen umfassen Anbindungsparameter für die Anbindung des Zubehörgeräts 30 im Fahrzeug 100. In zumindest manchen Ausführungsbeispielen können die Anbindungsparameter Informationen über ein oder mehrere von dem Zubehörgerät bereitgestellte Dienste umfassen. Die Anbindungsparameter können beispielsweise Information über durch die ein oder mehreren Dienste genutzten Datenformate, Protokolle und/oder Zugangspunkte (etwa Ports) umfassen. Die Anbindungsparameter können beispielsweise Information über Parameter für eine Konversion zwischen einem Datenformat des Zubehörgeräts und einem Datenformat des Computersystems des Fahrzeugs umfassen. Zusätzlich oder alternativ können die Anbindungsparameter ferner Information darüber umfassen, ob eine Verarbeitung von zu verarbeitenden Daten des Zubehörgeräts durch das Fahrzeug (unterstützt durch die Anbindungsparameter) oder durch den Server zu erfolgen hat (etwa über die zweite Datenkommunikationsverbindung).

Das Verfahren umfasst ferner das Anbinden 140 des Zubehörgeräts 30 in dem Fahrzeug 100 basierend auf der Steuerinformation (basierend auf den Anbindungsparametern). In anderen Worten können das Kommunikationsgerät, das Computersystem des Fahrzeugs und/oder eine weitere Komponente des Fahrzeugs die Anbindungsparameter nutzen, um das Zubehörgerät in Betrieb zu nehmen oder zu nutzen.

Nach der Anbindung des Kommunikationsgeräts kann das Zubehörgerät durch das Fahrzeug oder durch Insassen des Fahrzeugs genutzt werden. Dazu können etwa zu verarbeitenden Daten von dem Zubehörgerät empfangen und verarbeitet werden. Die zu verarbeitenden Daten können etwa Sensordaten des Zubehörgeräts und/oder Aktordaten des Zubehörgeräts oder für das Zubehörgerät umfassen. Dabei entsprechen Sensordaten etwa Daten, die von einem Sensor des Zubehörgeräts 30 stammen oder die auf einem Sensor des Zubehörgeräts basieren, etwa Videodaten eines Kamerasensors des Zubehörgeräts 30. Aktordaten können beispielsweise Daten entsprechen, die von dem Zubehörgerät generiert oder genutzt werden, um einen Betrieb des Zubehörgeräts 30 oder des Computersystems des Fahrzeugs zu steuern.

Das Verfahren kann ferner ein Empfangen 150 von zu verarbeitenden Daten von dem Zubehörgerät 30 über die erste Datenkommunikationsverbindung umfassen. Findet die Verbindung der Sensor/Aktordaten durch den Server statt, so können diese Daten an den Server weitergeleitet werden. In anderen Worten kann das Verfahren ein Weiterleiten 152 der zu verarbeitenden Daten zu dem Server 200 über die zweite Datenkommunikationsverbindung umfassen, um eine Verarbeitung der zu verarbeitenden Daten durch den Server 200 zu bewirken. Zusätzlich kann das Verfahren ein Übermitteln 170 von Fahrzeugdaten an den Server 200 umfassen. Die Fahrzeugdaten des Fahrzeugs können beispielsweise Sensor- oder Aktordaten sein, die von Komponenten des Fahrzeugs stammen, etwa von Antriebskomponenten des Fahrzeugs, von Sensoren oder Aktoren des Fahrzeugs, oder von Komponenten des Computersystems des Fahrzeugs. Die Komponente des Fahrzeugs kann dabei im Fahrzeug integriert sein.

Je nach Anwendungsfall kann der Server eine verarbeitete Fassung der Daten zurückgeben. In anderen Worten kann das Verfahren ferner ein Empfangen 160 einer verarbeiteten Fassung der zu verarbeitenden Daten von dem Server 200 über die zweite Datenkommunikationsverbindung umfassen. Wurden Fahrzeugdaten übertragen, so kann die überarbeitete Fassung der zu verarbeitenden Daten ferner auf den übermittelten Fahrzeugdaten basieren. Dabei bedeutet "verarbeitete Fassung" (der zu verarbeitenden Daten) lediglich, dass die verarbeitete Fassung auf den übermittelten zu verarbeitenden Daten basiert oder als Antwort auf die übermittelten zu verarbeitenden Daten generiert wurden. Dabei kann die verarbeitete Fassung der zu verarbeitenden Daten die übermittelten zu verarbeitenden Daten in einem Format umfassen, das für eine Nutzung durch das Fahrzeug geeignet ist. Alternativ oder zusätzlich kann die verarbeitete Fassung weitere Steuerinformationen umfassen, die dazu geeignet sind, das Fahrzeug oder das Zubehörgerät zu steuern.

Dabei kann mit den empfangenen verarbeiteten Fassungen der zu verarbeitenden Daten verschiedentlich verfahren werden. Beispielsweise kann das Verfahren ein Weiterleiten 162 einer verarbeiteten Fassung der zu verarbeitenden Daten an das Zubehörgerät 30 über die erste Datenkommunikationsverbindung umfassen. Alternativ oder zusätzlich kann das Verfahren ein Weiterleiten 168 einer verarbeiteten Fassung der zu verarbeitenden Daten an ein weiteres Gerät umfassen. Dabei kann das weitere Gerät beispielsweise ein Mobilgerät sein, etwa ein Smartphone oder ein Tablet-Computer, oder das weitere Gerät kann ein weiterer Server sein, an den die verarbeitete Fassung der zu verarbeitenden Daten weitergeleitet wird.

Zusätzlich oder alternativ kann die verarbeitete Fassung der zu verarbeitenden Daten durch das Fahrzeug genutzt werden. In anderen Worten kann das Verfahren ferner ein Nutzen 164 einer verarbeiteten Fassung der zu verarbeitenden Daten durch das Fahrzeug. Die Nutzung kann auf den Anbindungsparametern basieren. Ist das Zubehörgerät beispielsweise ein Radioempfangsmodul, so kann ein empfangenes Radiosignal durch ein Unterhaltungssystem des Fahrzeugs (basierend auf den Anbindungsparametern) genutzt werden. Ist das Zubehörgerät eine Rückfahrkamera, so kann ein (verarbeitetes) Videobild der Rückfahrkamera oder eine Abstandsmesseinrichtung, so kann das entsprechende Videobild oder eine Indikation des Abstands zu einer Umgebung des Fahrzeugs dargestellt oder als Grundlage eines (akustischen) Warnsignals genutzt werden. In anderen Worten kann das Verfahren ferner ein Anzeigen 166 einer verarbeiteten Fassung der zu verarbeitenden Daten über die Anzeigeeinheit des Fahrzeugs 100 umfassen. Alternativ kann eine akustische Ausgabeeinheit des Fahrzeugs verwendet werden.

Alternativ oder zusätzlich können die zu verarbeitenden Daten zumindest teilweise von dem Fahrzeug verarbeitet werden. Das Verfahren kann somit auch ein Verarbeiten 154 der zu verarbeitenden Daten durch das Fahrzeug 100 basierend auf den Anbindungsparametern umfassen, etwa um die verarbeitete Fassung der zu verarbeitenden Daten zu generieren. Die verarbeitete Fassung kann, wie bereits oben beschrieben, weitergeleitet oder genutzt werden. Dabei kann die Verarbeitung durch das Fahrzeug 100 auch auf Fahrzeugdaten des Fahrzeugs 100 basieren.

In manchen Ausführungsbeispielen kann auch ein hybrides Konzept verwendet werden: So kann eine Vorverarbeitung im Fahrzeug stattfinden, etwa um eine Datengröße zu verringern, oder um einen zeitlichen Zusammenhang zwischen den Fahrzeugdaten und den zu verarbeitenden Daten des Zubehörgeräts herzustellen oder zu dokumentieren, und die eigentliche Verarbeitung kann durch den Server geschehen. In anderen Worten kann die Verarbeitung durch das Fahrzeug 100 einer Vorverarbeitung entsprechen. Das Verfahren kann ferner ein Übermitteln 156 der vorverarbeiteten zu verarbeitenden Daten durch das Kommunikationsgerät 10 an den Server 200 über die zweite Datenkommunikationsverbindung umfassen, um eine Verarbeitung der vorverarbeiteten zu verarbeitenden Daten durch den Server 200 zu bewirken.

In zumindest manchen Ausführungsbeispielen kann das Kommunikationsgerät oder, genereller, das Computersystem des Fahrzeugs ausgebildet sein, um einen Datenaustausch zwischen dem Zubehörgerät und anderen Komponenten des Fahrzeugs oder anderen Entitäten zu kontrollieren und/oder einzuschränken. Beispielsweise können die die Anbindungsparameter Information über Zugriffsberechtigungen für das Zubehörgerät 30 umfassen. Die Information über die Zugriffsberechtigungen kann definieren, mit welchen anderen Komponenten oder Entitäten das Zubehörgerät Daten austauschen darf. Die Anbindung des Zubehörgeräts 30 kann auf der Information über die Zugriffsberechtigungen basieren. Beispielsweise kann das Computersystem oder das Kommunikationsgerät ausgebildet sein, um den Datenaustausch zwischen dem Zubehörgerät und den anderen Komponenten des Fahrzeugs oder den anderen Entitäten basierend auf der Information über die Zugriffsberechtigungen zu kontrollieren und/oder einzuschränken. Alternativ können die Zugriffsberechtigungen durch den Server implementiert werden, d.h. die Verarbeitung der zu verarbeitenden Daten durch den Server und/oder eine Weitergabe der Daten kann durch den Server eingeschränkt werden.

Die erste Schnittstelle 12 und/oder die zweite Schnittstelle 14 kann/können beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten. Die erste Schnittstelle und/oder die zweite Schnittstelle kann/können etwa mit (je) einem Kommunikationsmodul gekoppelt sein, und die Datenkommunikation kann über das Kommunikationsmodul oder die Kommunikationsmodule geführt werden. Ein Kommunikationsmodul kann als Mittel zum Kommunizieren, ein oder mehrere Kommunikationseinheiten und/oder ein oder mehrere Kommunikationsgeräte ausgebildet sein. Ein Kommunikationsmodul kann ein oder mehrere Elemente der Gruppe von ein oder mehrere Leistungsverstärker, ein oder mehrere Filter oder Filterschaltungen, ein oder mehrere Diplexer, ein oder mehrere Duplexer, ein oder mehrere Digital-zu-Analog-Konverter, ein oder mehrere Modulatoren, ein oder mehrere Demodulatoren, ein oder mehrere Mischer, ein oder mehrere Antennen etc. umfassen.

Die erste Schnittstelle 12 kann beispielsweise ausgebildet sein, um über zumindest ein Element der Gruppe von Bluetooth, NFC, WLAN, Ethernet oder einem Fahrzeugbus zu kommunizieren, etwa über ein Kommunikationsmodul.. Die zweite Schnittstelle 14 kann beispielsweise ausgebildet sein, über zumindest ein zelluläres Mobilkommunikationssystem der Gruppe von Global System for Mobile telecommunications (GSM), General Packet Radio Service (GPRS), Enhanced Data rates for GSM Evolution (EDGE), Universal Mobile Telecommunication System (UMTS), Long Term Evolution (LTE), Long Term Evolution Advanced (LTE-A), und ein Mobilfunksystem der 5. Generation (5G) zu kommunizieren, etwa über ein Kommunikationsmodul.

In Ausführungsbeispielen kann das Kontrollmodul 16 einem beliebigen Controller oder Prozessor oder einer programmierbaren Hardwarekomponente entsprechen. Beispielsweise kann das Kontrollmodul 16 auch als Software realisiert sein, die für eine entsprechende Hardwarekomponente programmiert ist. Insofern kann das Kontrollmodul 16 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 16 denkbar.

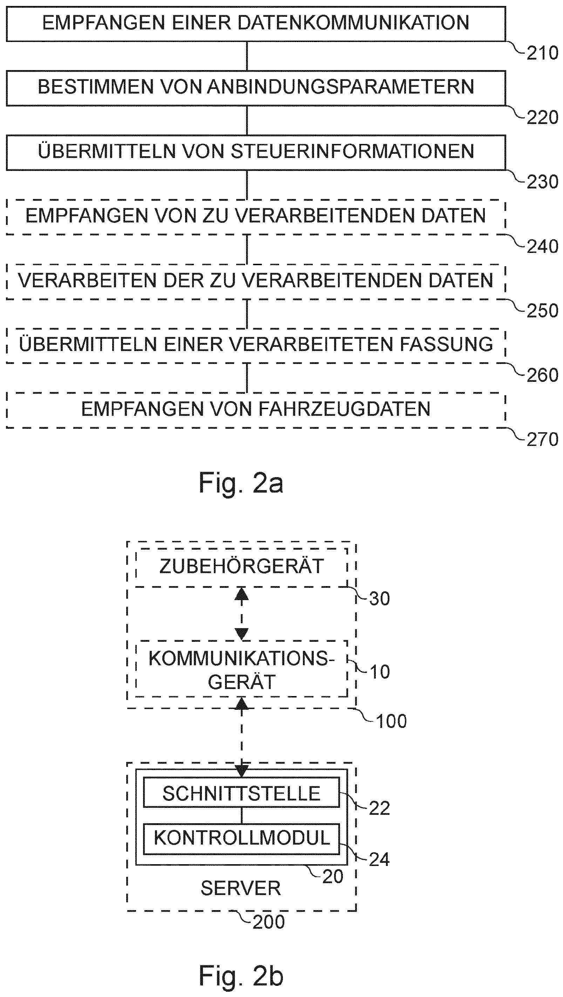

Fig. 2a zeigt ein Flussdiagramm eines Ausführungsbeispiels eines Verfahrens für einen Server 200. Das Verfahren umfasst ein Empfangen 210 einer Datenkommunikation eines Zubehörgeräts 30 für ein Fahrzeug 100 von einem Kommunikationsgerät 10 des Fahrzeugs 100 über eine Datenkommunikationsverbindung. Die Datenkommunikationsverbindung kann beispielsweise der zweiten Datenkommunikationsverbindung, die in Zusammenhang mit den Fign. 1a bis 1c beschrieben wird, entsprechen. Die Datenkommunikation stammt von dem Zubehörgerät 30 und ist von dem Kommunikationsgerät 10 weitergeleitet. Das Verfahren umfasst ferner ein Bestimmen 220 von Anbindungsparametern für eine Anbindung des Zubehörgeräts 30 in dem Fahrzeug 100 basierend auf der Datenkommunikation. Das Verfahren umfasst ferner ein Übermitteln 230 von Steuerinformationen für das Zubehörgerät 30 an das Kommunikationsgerät 10 über die Datenkommunikationsverbindung. Die Steuerinformationen umfassen die Anbindungsparameter für die Anbindung des Zubehörgeräts 30 im Fahrzeug 100. Das Verfahren kann beispielsweise von dem Server ausgeführt werden.

Fig. 2b zeigt ein Blockdiagramm eines Ausführungsbeispiels einer (entsprechenden) Vorrichtung 20 für einen Server 200. Die Vorrichtung 20 umfasst eine Schnittstelle 22 zur Kommunikation mit einem Kommunikationsgerät 10 eines Fahrzeugs 100 über eine Datenkommunikationsverbindung. Die Vorrichtung 20 umfasst ferner ein Kontrollmodul 24, das gekoppelt ist mit der Schnittstelle 20. Das Kontrollmodul 24 kann beispielsweise ausgebildet sein, um das Verfahren der Fig. 2a auszuführen. Beispielsweise ist das Kontrollmodul 24 ausgebildet zum Empfangen einer Datenkommunikation eines Zubehörgeräts 30 für das Fahrzeug 100 von dem Kommunikationsgerät 10 des Fahrzeugs 100 über eine Datenkommunikationsverbindung. Die Datenkommunikation stammt von dem Zubehörgerät 30 stammt und ist von dem Kommunikationsgerät 10 weitergeleitet. Das Kontrollmodul 24 ist ausgebildet zum Bestimmen von Anbindungsparametern für eine Anbindung des Zubehörgeräts 30 in dem Fahrzeug 100 basierend auf der Datenkommunikation. Das Kontrollmodul 24 ist ausgebildet zum Übermitteln von Steuerinformationen für das Zubehörgerät 30 an das Kommunikationsgerät 10 über die Datenkommunikationsverbindung. Die Steuerinformationen umfassen die Anbindungsparameter für die Anbindung des Zubehörgeräts 30 im Fahrzeug 100.

Fig. 2b zeigt ferner den Server 200 mit der Vorrichtung 20. Fig. 2b zeigt ferner ein System, das den Server und das Fahrzeug, etwa das Fahrzeug 100 von Fig. 1c, umfasst.

Zumindest manche Ausführungsbeispielen schaffen ein Verfahren, eine Vorrichtung sowie ein Computerprogramm für einen Server. Dieser Server fungiert als Kommunikationspartner für das Verfahren, das Kommunikationsgerät und/oder das Computerprogramm der Fign. 1a bis 1c, d.h. der Server ist dafür zuständig, die Anbindungsparameter basierend auf der weitergeleiteten Datenkommunikation zu generieren und (optional) eine Verarbeitung der Daten des Zubehörgeräts durchzuführen.

Entsprechend umfasst das Verfahren das Bestimmen 220 der Anbindungsparameter basierend auf der Datenkommunikation. Dabei können die Anbindungsparameter basierend auf der Datenkommunikation generiert werden, etwa basierend auf einer Spezifikation des Zubehörgerät, die aus der Datenkommunikation hervorgeht. Alternativ oder zusätzlich können die Anbindungsparameter aus einer Datenbank abgerufen werden, etwa basierend auf der eingereichten Kennung des Zubehörgeräts oder basierend auf dem Identifikator für den Typ des Zubehörgeräts. Anschließend können die Steuerinformationen mit den Anbindungsparametern zu dem Kommunikationsgerät des Fahrzeugs übermittelt werden.

In manchen Ausführungsbeispielen übernimmt der Server ferner zumindest teilweise die Verarbeitung von zu verarbeitenden Daten des Zubehörgeräts. In anderen Worten kann das Verfahren ein Empfangen 240 von zu verarbeitenden Daten des Zubehörgeräts 30 von dem Kommunikationsgerät 10 des Fahrzeugs 100 umfassen. Das Verfahren kann ferner ein Verarbeiten 250 der zu verarbeitenden Daten umfassen. Das Verfahren kann ferner ein Übermitteln 260 einer verarbeiteten Fassung der zu verarbeitenden Daten zu dem Kommunikationsgerät 10 des Fahrzeugs 100 über die Datenkommunikationsverbindung umfassen. In manchen Ausführungsbeispielen kann das Verfahren ferner ein Empfangen 270 von Fahrzeugdaten des Fahrzeugs 100 von dem Kommunikationsgerät 10 umfassen. Das Verarbeiten 250 der zu verarbeitenden Daten kann auf den Fahrzeugdaten basieren. Beispielsweise können die zu verarbeitenden Daten durch das Fahrzeug vorverarbeitet sein. In diesem Fall kann die Verarbeitung auf den vorverarbeiteten zu verarbeitenden Daten basieren. Dabei kann die Verarbeitung ähnlich wie im Zusammenhang mit den Fign. 1a bis 1c beschrieben durchgeführt werden.

Die Schnittstelle 22 kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code, innerhalb eines Moduls, zwischen Modulen, oder zwischen Modulen verschiedener Entitäten. Die erste Schnittstelle und/oder die zweite Schnittstelle kann/können etwa mit (je) einem Kommunikationsmodul gekoppelt sein, und die Datenkommunikation kann über das Kommunikationsmodul oder die Kommunikationsmodule geführt werden. Ein Kommunikationsmodul kann als Mittel zum Kommunizieren, ein oder mehrere Kommunikationseinheiten und/oder ein oder mehrere Kommunikationsgeräte ausgebildet sein. Ein Kommunikationsmodul kann ein oder mehrere Elemente der Gruppe von ein oder mehrere Leistungsverstärker, ein oder mehrere Filter oder Filterschaltungen, ein oder mehrere Diplexer, ein oder mehrere Duplexer, ein oder mehrere Digital-zu-Analog-Konverter, ein oder mehrere Modulatoren, ein oder mehrere Demodulatoren, ein oder mehrere Mischer, ein oder mehrere Antennen etc. umfassen.

Die Schnittstelle 22 kann beispielsweise ausgebildet sein, über zumindest ein zelluläres Mobilkommunikationssystem der Gruppe von Global System for Mobile telecommunications (GSM), General Packet Radio Service (GPRS), Enhanced Data rates for GSM Evolution (EDGE), Universal Mobile Telecommunication System (UMTS), Long Term Evolution (LTE), Long Term Evolution Advanced (LTE-A), und ein Mobilfunksystem der 5. Generation (5G) zu kommunizieren, etwa über ein Kommunikationsmodul.

In Ausführungsbeispielen kann das Kontrollmodul 24 einem beliebigen Controller oder Prozessor oder einer programmierbaren Hardwarekomponente entsprechen. Beispielsweise kann das Kontrollmodul 24 auch als Software realisiert sein, die für eine entsprechende Hardwarekomponente programmiert ist. Insofern kann das Kontrollmodul 24 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 24 denkbar.

Mehr Details und Aspekte des Verfahrens oder der Vorrichtung 20 werden in Verbindung mit dem Konzept oder Beispielen genannt, die vorher (z.B. Fig. 1a bis 1c) beschrieben wurden. Die Vorrichtung 20 und/oder das Verfahren kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden. Ausführungsbeispiele schaffen eine Zubehörintegration in einem vernetzten Fahrzeug mit cloudbasierter Verarbeitung (d.h. Verarbeitung durch den Server).

Bei einer Anbindung eines Zubehörgeräts in ein Fahrzeug ist eine Vielzahl von Dingen zu beachten. Zwei häufige Problemstellungen sind, dass mechanische Integrationspunkte mit Fixationsmöglichkeiten, freiem Einbauvolumen und Stromversorgung fehlen, und dass die Integration mit der vorhandenen Fahrzeugelektronik (z.B. Verarbeitungsrechner und Benutzerschnittstelle) ist nicht vorgesehen und ggfs. auch aus IT- und Fahrzeugsicherheitsaspekten problematisch sein kann.

In vielen Fällen nutzt ein Zubehör die Stromversorgung des Fahrzeugs durch vorhandene Ladepunkte (Zigarettenanzünder, USB-Schnittstellen, Steckdose, wie beispielsweise 230V-Steckdose). Abgesehen davon erfolgt häufig keine Anbindung. Somit ist dieses Zubehör meist nicht mit den Fahrzeugsensoren oder -aktoren vernetzt. Ebenso fehlt häufig eine Anbindung an die Benutzerschnittstelle des Fahrzeugs. Zudem wird die Rechnerinfrastruktur des Fahrzeugs (integrierte Steuergeräte, Zentralcomputer oder auch die Cloudanbindung) meist nicht genutzt.

Zumindest manche Ausführungsbeispiele sind darauf gerichtet, die Anbindung des Zubehörs zu verbessern.

Dabei kann das Zubehör in einem ersten Schritt im Fahrzeug verbaut werden und kann damit eine mechanische Befestigung sowie (optional) eine Stromversorgung erhalten, sofern das Zubehör nicht batteriebetrieben ist. Idealerweise werden im Fahrzeug diese Integrationspunkte schon vorbereitet, es ist allerdings auch denkbar, Umbauarbeiten in einer Werkstatt zu nutzen. Die Kommunikation des Zubehörs kann beispielsweise drahtlos (z.B. über Bluetooth oder WiFi, etwa über die erste Datenkommunikationsverbindung) mit einer Online Connectivity Unit (Online-Konnektivitätseinheit, etwa das Kommunikationsgerät) im Fahrzeug hergestellt. Dafür kann der Benutzer das Zubehör an der Online Connectivity Unit anmelden oder dieses kann automatisch erkannt und verbunden werden.

Die Grundidee zumindest mancher Ausführungsbeispiele der cloudbasierten Anbindung des Zubehörs liegt darin, dass Zusatzgeräte, wie das Zubehörgerät, durch die Hardware und Software im Fahrzeug nicht direkt genutzt werden und daher die Integration mit den Fahrzeuginformationen in eine Cloud, etwa den Server, ausgelagert wird. Diese Auslagerung in die Cloud durch Nutzung eines digitalen Datenmodells des Fahrzeugs ("digital twin", digitaler Zwilling) ermöglicht auch ein höheres Sicherheitsniveau, weil keine direkte Steuermöglichkeit im Fahrzeug durch das Zubehör angeboten wird.

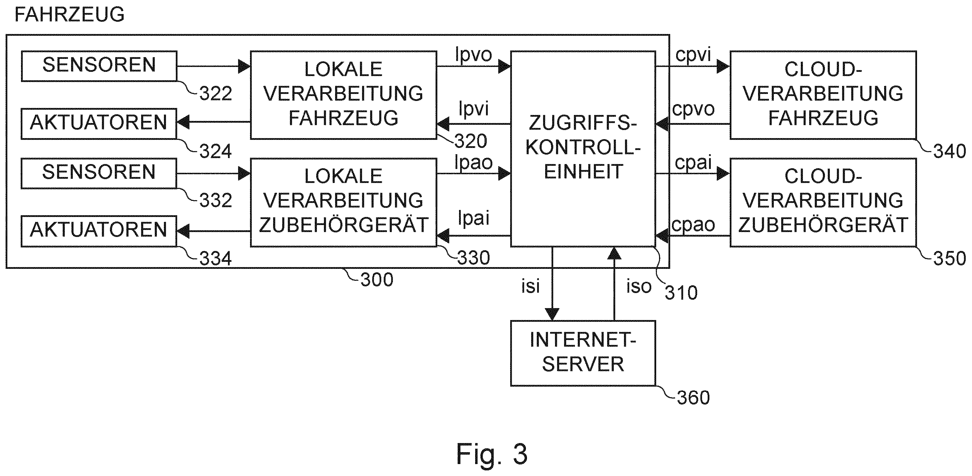

In Fig. 3 ist eine beispielhafte Systemarchitektur für die Einbindung des Zubehörs skizziert. Fig. 3 zeigt ein Blockdiagramm der Systemarchitektur für Datenfluss einer cloudbasierten/serverbasierten Anbindung von Fahrzeugzubehör. Fig. 3 zeigt ein Fahrzeug 300, das dem Fahrzeug 100 von Fig. 1c und Fig. 2b entsprechen kann. Das Fahrzeug umfasst eine Zugriffskontrolleinheit 310, eine Einheit zum lokalen Verarbeiten von Fahrzeugdaten 320, die Daten von Sensoren 322 erhält und Daten für Aktuatoren 324 bereitstellt, und eine Einheit zum lokalen Verarbeiten von Daten eines Zubehörgeräts 330, die ebenfalls Daten von Sensoren 332 erhält und Daten für Aktuatoren 334 bereitstellt. Die beiden Verarbeitungseinheiten sind über die Zugriffskontrolleinheit mit einer Einheit zum serverbasierten/cloudbasierten Verarbeiten von Fahrzeugdaten 340, mit einer Einheit zum serverbasierten/cloudbasierten Verarbeiten von Daten des Zubehörgeräts 350 und mit einem oder mehreren Internetservern 360 gekoppelt. Dabei können die beiden Einheiten zum serverbasierten/cloudbasierten Verarbeiten von Daten durch den Server 200 der Fign. 1c/2b implementiert sein.

Dabei wurde der Fokus auf zwei Felder gelegt, die für eine nachträgliche Integration von intelligentem Zubehör im Fahrzeug von Bedeutung scheinen:
Der Datenfluss für Sensoren und Aktuatoren ist für die Fahrzeuginstallation und das Zubehör meist getrennt. Der Block Zugriffskontrolleinheit steuert den Zugang zu Informationen. Für jede Datenverbindung (Ausgabe eines Blocks → Eingabe eines anderen Blocks) können zwei Eigenschaften festgelegt werden:
- Liste der erlaubten Adressen (etwa Internetprotokolladressen/Internetadressen (IP und Portnummer), entweder als Whitelist (Liste mit Positiveinträgen) oder Blacklist (Liste mit Negativeinträgen) und
- ggfs. auch erlaubte Inhalte (dies setzt aber eine Analyse der Nachrichten in der Zugriffskontrolleinheit voraus).

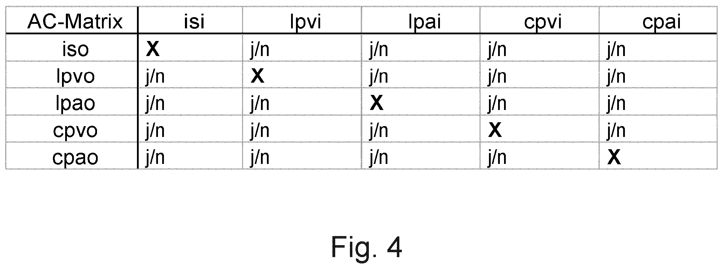

Fig. 4 zeigt eine Tabelle einer entsprechenden Zugriffskontrollmatrix (auch engl. Access Control Matrix), um Ausgabekanäle von Blöcken bei vorhandenen Zugriffsrechten mit den Eingabekanälen anderer Blöcke zu verbinden

Die Tabelle von Fig. 4 ermöglicht eine flexible Konfiguration für den Datenzugriff von Zubehör: Jeder Ausgabekanal
- Internetserver-Ausgabe (iso, Internet-Server Output)
- Lokale Verarbeitung von Fahrzeugdaten-Ausgabe (Ipvo, Local Processing Vehicle Output)
- Lokale Verarbeitung von Daten des Zubehörgeräts-Ausgabe (Ipao, Local Processing Accessory Output)
- Serverbasierte Verarbeitung Fahrzeugdaten-Ausgabe (cpvo, Cloud Processing Vehicle Output)
- Serverbasierte Verarbeitung von Daten des Zubehörgeräts-Ausgabe (cpao, Cloud Processing Accessory Output)
kann mit jedem anderen Eingabekanal (direkte Verbindung von Ausgabe zu Eingabe eines Blocks ist in manchen Ausführungsbeispielen nicht erlaubt) bei Erteilung der Zugriffsrechte verbunden werden und ist entweder aktiv (j) oder inaktiv (n):
- Internetserver-Eingabe (isi, Internet-Server Input)
- Lokale Verarbeitung von Fahrzeugdaten-Eingabe (Ipvi, Local Processing Vehicle Input)
- Lokale Verarbeitung von Daten des Zubehörgeräts-Eingabe (lpai, Local Processing Accessory Input)
- Serverbasierte Verarbeitung Fahrzeugdaten-Eingabe (cpvi, Cloud Processing Vehicle Input)
- Serverbasierte Verarbeitung von Daten des Zubehörgeräts-Eingabe (cpai, Cloud Processing Accessory Input)

Eine neue Hardware/Software-Lösung für das Fahrzeug kann somit eine Verarbeitung in der Cloud vornehmen, ggfs. auf Fahrzeugdaten zugreifen und Ergebnisse entweder weiterschicken (z.B. zur Information an mobile Geräte) oder auch durch Integration in der Cloud (etwa auf dem Server) in der Benutzerschnittstelle im Fahrzeug anzeigen, ohne dass die Software im Fahrzeug geändert werden muss.

Mit Hilfe von Ausführungsbeispielen kann eine neue beim Design des Fahrzeugs unbekannte Zubehörlösung nachträglich im Fahrzeug befestigt und mit Strom versorgt werden. Die Datenkommunikation mit dem Zubehör erfolgt beispielsweise drahtlos über WiFi, Bluetooth oder einen anderen Nahbereichsfunk mit der Online Connectivity Unit im Fahrzeug. Diese sendet die Daten aus dem Fahrzeug in die Cloud und empfängt die Antworten.

Dabei muss die Software im Fahrzeug in manchen Ausführungsbeispielen nicht geändert werden, weil die Sensor- und Aktordaten des Zubehörs in der Cloud verarbeitet werden können. Die Ergebnisse können entweder auf dem umgekehrten Weg wieder zum Zubehör übertragen werden oder in der Cloud mit Fahrzeugdaten fusioniert werden.

Der Benutzer hat über eine Zugriffskontrollmatrix die komplette Kontrolle über seine Daten erhalten und kann sowohl eine separate Auswertung der Zubehördaten, als auch eine Integration und Fusion mit Fahrzeugdaten einstellen.

In manchen Ausführungsbeispielen ist ein Routing der Fahrzeug- und Zubehördaten über den Access Control-Block im Fahrzeug vorgesehen, wie in Zusammenhang mit Fig. 3 beschrieben. Damit ist neben der Verarbeitung in der Cloud auch eine komplett lokale Datenverarbeitung und Fusion von Fahrzeug- und Zubehördaten im Fahrzeug möglich.

In diesem Szenario könnte das Zubehörgerät z.B. eine Computing Unit (Recheneinheit) sein, die drahtlos ans Fahrzeug angebunden die verfügbare Rechenleistung erhöht. Die Computing Unit könnte auch ein mobiles Gerät sein, das nur während der Fahrt verfügbar ist.

Der Zugriffskontrolleinheit könnte aber alternativ auch auf dem Server direkt hinter der Kommunikationsschnittstelle zum Fahrzeug implementiert werden. Damit kann die Online Connectivity Unit im Fahrzeug die beiden Datenarten (Fahrzeugdaten und Zubehördaten) separat und unfusioniert übertragen. Erst in der Cloud würde über die weitere Nutzung der Daten und das Routing entschieden. Dabei ermöglicht die lokale Zugriffskontrolle eine stärkere Kontrolle über die Daten schon im Fahrzeug und kann eine lokale Filterung der Daten und Datenreduktion umsetzen. Weiterhin ist eine komplett lokale Einbindung des Zubehörs denkbar, ohne dass eine Cloudverarbeitung notwendig ist, etwa über die bereitgestellten Anbindungsparameter.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Kommunikationsgerät
- 12: Erste Schnittstelle
- 14: Zweite Schnittstelle
- 16: Kontrollmodul
- 20: Vorrichtung für einen Server
- 30: Zubehörgerät
- 100: Fahrzeug
- 110: Empfangen von Datenkommunikation
- 120: Weiterleiten der Datenkommunikation
- 130: Empfangen von Steuerinformationen
- 140: Anbinden eines Zubehörgeräts
- 150: Empfangen von zu verarbeitenden Daten
- 152: Weiterleiten der zu verarbeitenden Daten
- 154: Verarbeiten der zu verarbeitenden Daten
- 156: Übermitteln von vorverarbeiteten zu verarbeitenden Daten
- 160: Empfangen einer verarbeiteten Fassung
- 162: Weiterleiten der verarbeiteten Fassung
- 164: Nutzen der verarbeiteten Fassung
- 166: Anzeigen der verarbeiteten Fassung
- 168: Weiterleiten der verarbeiteten Fassung
- 170: Übermitteln von Fahrzeugdaten
- 180: Bereitstellen einer Befestigung und/oder einer Stromversorgung
- 200: Server
- 210: Empfangen einer Datenkommunikation
- 220: Bestimmen von Anbindungsparametern
- 230: Übermitteln von Steuerinformationen
- 240: Empfangen von zu verarbeitenden Daten
- 250: Verarbeiten der zu verarbeitenden Daten
- 260: Übermitteln einer verarbeiteten Fassung
- 270: Empfangen von Fahrzeugdaten
- 300: Fahrzeug
- 310: Zugriffskontrolleinheit
- 320: Einheit zum lokalen Verarbeiten von Fahrzeugdaten
- 322: Sensoren
- 324: Aktuatoren
- 330: Einheit zum lokalen Verarbeiten von Daten eines Zubehörgeräts
- 332: Sensoren
- 334: Aktuatoren
- 340: Einheit zum serverbasierten/cloudbasierten Verarbeiten von Fahrzeugdaten
- 350: Einheit zum serverbasierten/cloudbasierten Verarbeiten von Daten des Zubehörgeräts
- 360: Internetserver

## Patentansprüche

1. Verfahren zum Anbinden eines Zubehörgeräts (30) in einem Fahrzeug (100), das Verfahren umfassend:
Empfangen (110) von Datenkommunikation von dem Zubehörgerät (30) durch ein Kommunikationsgerät (10) des Fahrzeugs (100) über eine erste Datenkommunikationsverbindung;
Weiterleiten (120) der Datenkommunikation des Zubehörgeräts (30) durch das Kommunikationsgerät (10) zu einem Server (200) über eine zweite Datenkommunikationsverbindung;
Empfangen (130) von Steuerinformationen für das Zubehörgerät (30) durch das Kommunikationsgerät (10) von dem Server (200) über die zweite Datenkommunikationsverbindung, wobei die Steuerinformationen Anbindungsparameter für die Anbindung des Zubehörgeräts (30) im Fahrzeug (100) umfassen;
Anbinden (140) des Zubehörgeräts (30) in dem Fahrzeug (100) basierend auf der Steuerinformation; **gekennzeichnet durch**:
Empfangen (150) von zu verarbeitenden Daten von dem Zubehörgerät (30) über die erste Datenkommunikationsverbindung, wobei die zu verarbeitenden Daten Sensordaten des Zubehörgeräts und/oder Aktordaten des Zubehörgeräts oder für das Zubehörgerät umfassen; und
Weiterleiten (152) der zu verarbeitenden Daten zu dem Server (200) über die zweite Datenkommunikationsverbindung, um eine Verarbeitung der zu verarbeitenden Daten durch den Server (200) zu bewirken.

2. Das Verfahren gemäß Anspruch 1, ferner umfassend Empfangen (160) einer verarbeiteten Fassung der zu verarbeitenden Daten von dem Server (200) über die zweite Datenkommunikationsverbindung.

3. Das Verfahren gemäß Anspruch 2, ferner umfassend Weiterleiten (162) der verarbeiteten Fassung der zu verarbeitenden Daten an das Zubehörgerät (30) über die erste Datenkommunikationsverbindung.

4. Das Verfahren gemäß Anspruch 2, ferner umfassend Nutzen (164) der verarbeiteten Fassung der zu verarbeitenden Daten durch das Fahrzeug, wobei die Nutzung auf den Anbindungsparametern basiert,
und/oder ferner umfassend Anzeigen (166) der verarbeiteten Fassung der zu verarbeitenden Daten über eine Anzeigeeinheit des Fahrzeugs (100),
und/oder ferner umfassend Weiterleiten (168) der verarbeiteten Fassung der zu verarbeitenden Daten an ein weiteres Gerät.

5. Das Verfahren gemäß einem der Ansprüche 2 bis 4, ferner umfassend Übermitteln (170) von Fahrzeugdaten an den Server (200), wobei die verarbeitete Fassung der zu verarbeitenden Daten ferner auf den übermittelten Fahrzeugdaten basiert.

6. Das Verfahren gemäß einem der vorhergehenden Ansprüche, umfassend Empfangen (150) von zu verarbeitenden Daten von dem Zubehörgerät (30) über die erste Datenkommunikationsverbindung, und Verarbeiten (154) der zu verarbeitenden Daten durch das Fahrzeug (100) basierend auf den Anbindungsparametern.

7. Das Verfahren gemäß Anspruch 6, wobei die Verarbeitung durch das Fahrzeug (100) einer Vorverarbeitung entspricht, ferner umfassend Übermitteln (156) der vorverarbeiteten zu verarbeitenden Daten durch das Kommunikationsgerät (10) an den Server (200) über die zweite Datenkommunikationsverbindung, um eine Verarbeitung der vorverarbeiteten zu verarbeitenden Daten durch den Server (200) zu bewirken, und/oder wobei die Verarbeitung durch das Fahrzeug (100) auf Fahrzeugdaten des Fahrzeugs (100) basiert.

8. Das Verfahren gemäß einem der Ansprüche 1 bis 7, wobei die Anbindungsparameter Information über Zugriffsberechtigungen für das Zubehörgerät (30) umfassen, wobei die Anbindung des Zubehörgeräts (30) auf der Information über die Zugriffsberechtigungen basiert.

9. Das Verfahren gemäß einem der Ansprüche 1 bis 8, wobei das Verfahren ferner ein Bereitstellen (180) einer Befestigung und/oder einer Stromversorgung für das Zubehörgerät (30) umfasst, wobei die Befestigung einer magnetischen Befestigung entspricht und/oder wobei die Stromversorgung auf einer induktiven Energieübertragung basiert.

10. Verfahren für einen Server (200), das Verfahren umfassend:
Empfangen (210) einer Datenkommunikation eines Zubehörgeräts (30) für ein Fahrzeug (100) von einem Kommunikationsgerät (10) des Fahrzeugs (100) über eine Datenkommunikationsverbindung, wobei die Datenkommunikation von dem Zubehörgerät (30) stammt und von dem Kommunikationsgerät (10) weitergeleitet ist;
Bestimmen (220) von Anbindungsparametern für eine Anbindung des Zubehörgeräts (30) in dem Fahrzeug (100) basierend auf der Datenkommunikation; und
Übermitteln (230) von Steuerinformationen für das Zubehörgerät (30) an das Kommunikationsgerät (10) über die Datenkommunikationsverbindung, wobei die Steuerinformationen die Anbindungsparameter für die Anbindung des Zubehörgeräts (30) im Fahrzeug (100) umfassen; **gekennzeichnet durch**:
Empfangen (240) von zu verarbeitenden Daten des Zubehörgeräts (30) von dem Kommunikationsgerät (10) des Fahrzeugs (100), wobei die zu verarbeitenden Daten Sensordaten des Zubehörgeräts und/oder Aktordaten des Zubehörgeräts oder für das Zubehörgerät umfassen;
Verarbeiten (250) der zu verarbeitenden Daten; und
Übermitteln (260) einer verarbeiteten Fassung der zu verarbeitenden Daten zu dem Kommunikationsgerät (10) des Fahrzeugs (100) über die Datenkommunikationsverbindung.

11. Das Verfahren gemäß Anspruch 10, ferner umfassend Empfangen (270) von Fahrzeugdaten des Fahrzeugs (100) von dem Kommunikationsgerät (10), wobei das Verarbeiten (250) der zu verarbeitenden Daten auf den Fahrzeugdaten basiert.

12. Programm mit einem Programmcode zum Durchführen zumindest eines der Verfahren gemäß einem der Ansprüche 1 bis 11, wenn der Programmcode auf einem Computer, einem Prozessor, einem Kontrollmodul oder einer programmierbaren Hardwarekomponente ausgeführt wird.

13. Kommunikationsgerät (10) für ein Fahrzeug (100), umfassend:
eine erste Schnittstelle (12) zur Datenkommunikation mit einem Zubehörgerät (30) für das Fahrzeug (100) über eine erste Datenkommunikationsverbindung;
eine zweite Schnittstelle (14) zur Datenkommunikation mit einem Server (200) über eine zweite Datenkommunikationsverbindung; und
ein Kontrollmodul (16) ausgebildet zum:
Empfangen von Datenkommunikation von dem Zubehörgerät (30) über die erste Schnittstelle (12),
Weiterleiten der Datenkommunikation des Zubehörgeräts (30) zu dem Server (200) über die zweite Schnittstelle (14),
Empfangen von Steuerinformationen für das Zubehörgerät (30) von dem Server (200) über die zweite Schnittstelle (14), wobei die Steuerinformationen Anbindungsparameter für die Anbindung des Zubehörgeräts (30) im Fahrzeug (100) umfassen, und
Nutzen der Anbindungsparameter, um das Zubehörgerät (30) an dem Fahrzeug (100) anzubinden (100); **gekennzeichnet durch**:
Empfangen (150) von zu verarbeitenden Daten von dem Zubehörgerät (30) über die erste Schnittstelle, wobei die zu verarbeitenden Daten Sensordaten des Zubehörgeräts und/oder Aktordaten des Zubehörgeräts oder für das Zubehörgerät umfassen; und
Weiterleiten (152) der zu verarbeitenden Daten zu dem Server (200) über die zweite Schnittstelle, um eine Verarbeitung der zu verarbeitenden Daten durch den Server (200) zu bewirken.

14. Vorrichtung für einen Server, umfassend:
Eine Schnittstelle (22) zur Kommunikation mit einem Kommunikationsgerät eines Fahrzeugs über eine Datenkommunikationsverbindung; und
Ein Kontrollmodul (24), ausgebildet zum:
Empfangen einer Datenkommunikation eines Zubehörgeräts für ein Fahrzeug von dem Kommunikationsgerät des Fahrzeugs über die Datenkommunikationsverbindung, wobei die Datenkommunikation von dem Zubehörgerät stammt und von dem Kommunikationsgerät weitergeleitet ist,
Bestimmen von Anbindungsparametern für eine Anbindung des Zubehörgeräts in dem Fahrzeug basierend auf der Datenkommunikation,
Übermitteln von Steuerinformationen für das Zubehörgerät an das Kommunikationsgerät über die Datenkommunikationsverbindung, wobei die Steuerinformationen die Anbindungsparameter für die Anbindung des Zubehörgeräts im Fahrzeug umfassen, **gekennzeichnet durch**:
Empfangen von zu verarbeitenden Daten des Zubehörgeräts von dem Kommunikationsgerät des Fahrzeugs, wobei die zu verarbeitenden Daten Sensordaten des Zubehörgeräts und/oder Aktordaten des Zubehörgeräts oder für das Zubehörgerät umfassen,
Verarbeiten der zu verarbeitenden Daten, und
Übermitteln einer verarbeiteten Fassung der zu verarbeitenden Daten zu dem Kommunikationsgerät des Fahrzeugs über die Datenkommunikationsverbindung.

## Claims

1. Method for connecting an accessory device (30) in a vehicle (100), the method comprising:
receiving (110) data communication from the accessory device (30) by a communication device (10) of the vehicle (100) via a first data communication connection;
forwarding (120) the data communication of the accessory device (30) by the communication device (10) to a server (200) via a second data communication connection;
receiving (130) control information for the accessory device (30) by the communication device (10) from the server (200) via the second data communication connection, the control information comprising connection parameters for connecting the accessory device (30) in the vehicle (100);
connecting (140) the accessory device (30) in the vehicle (100) on the basis of the control information; **characterized by:**
receiving (150) data to be processed from the accessory device (30) via the first data communication connection, the data to be processed comprising sensor data of the accessory device and/or actuator data of the accessory device or for the accessory device; and
forwarding (152) the data to be processed to the server (200) via the second data communication connection in order to effect processing of the data to be processed by the server (200).

2. The method according to claim 1, further comprising receiving (160) a processed version of the data to be processed from the server (200) via the second data communication connection.

3. The method according to claim 2, further comprising forwarding (162) the processed version of the data to be processed to the accessory device (30) via the first data communication connection.

4. The method according to claim 2, further comprising using (164) the processed version of the data to be processed by the vehicle, wherein the use is based on the connection parameters,
and/or further comprising displaying (166) the processed version of the data to be processed via a display unit of the vehicle (100),
and/or further comprising forwarding (168) the processed version of the data to be processed to another device.

5. The method according to any of claims 2 to 4, further comprising transmitting (170) vehicle data to the server (200), wherein the processed version of the data to be processed is further based on the transmitted vehicle data.

6. The method according to any of the preceding claims, comprising receiving (150) data to be processed from the accessory device (30) via the first data communication connection, and processing (154) the data to be processed by the vehicle (100) on the basis of the connection parameters.

7. The method according to claim 6, wherein the processing by the vehicle (100) corresponds to a pre-processing, further comprising transmitting (156) the pre-processed data to be processed by the communication device (10) to the server (200) via the second data communication connection in order to effect processing of the pre-processed data to be processed by the server (200), and/or wherein the processing by the vehicle (100) is based on vehicle data of the vehicle (100).

8. The method according to any of claims 1 to 7, wherein the connection parameters comprise information about access authorizations for the accessory device (30), wherein the connection of the accessory device (30) is based on the information about the access authorizations.

9. The method according to any of claims 1 to 8, wherein the method further comprises providing (180) a fastening and/or a power supply for the accessory device (30), wherein the fastening corresponds to a magnetic fastening and/or wherein the power supply is based on an inductive energy transfer.

10. Method for a server (200), the method comprising:
receiving (210) a data communication of an accessory device (30) for a vehicle (100) from a communication device (10) of the vehicle (100) via a data communication connection, the data communication originating from the accessory device (30) and being forwarded by the communication device (10);
determining (220) connection parameters for connecting the accessory device (30) in the vehicle (100) on the basis of the data communication; and
transmitting (230) control information for the accessory device (30) to the communication device (10) via the data communication connection, the control information comprising the connection parameters for connecting the accessory device (30) in the vehicle (100); **characterized by:**
receiving (240) data to be processed of the accessory device (30) from the communication device (10) of the vehicle (100), the data to be processed comprising sensor data of the accessory device and/or actuator data of the accessory device or for the accessory device;
processing (250) the data to be processed; and
transmitting (260) a processed version of the data to be processed to the communication device (10) of the vehicle (100) via the data communication connection.

11. The method according to claim 10, further comprising receiving (270) vehicle data of the vehicle (100) from the communication device (10), wherein the processing (250) of the data to be processed is based on the vehicle data.

12. Program having a program code for implementing at least one of the methods according to any of claims 1 to 11 when the program code is executed on a computer, a processor, a control module, or a programmable hardware component.

13. Communication device (10) for a vehicle (100), comprising:
a first interface (12) for data communication with an accessory device (30) for the vehicle (100) via a first data communication connection;
a second interface (14) for data communication with a server (200) via a second data communication connection; and
a control module (16) designed for:
receiving data communication from the accessory device (30) via the first interface (12),
forwarding the data communication of the accessory device (30) to the server (200) via the second interface (14),
receiving control information for the accessory device (30) from the server (200) via the second interface (14), the control information comprising connection parameters for connecting the accessory device (30) in the vehicle (100), and
using the connection parameters to connect (100) the accessory device (30) to the vehicle (100); **characterized by:**
receiving (150) data to be processed from the accessory device (30) via the first interface, the data to be processed comprising sensor data of the accessory device and/or actuator data of the accessory device or for the accessory device; and
forwarding (152) the data to be processed to the server (200) via the second interface in order to effect processing of the data to be processed by the server (200).

14. Apparatus for a server, comprising:
an interface (22) for communicating with a communication device of a vehicle via a data communication connection; and
a control module (24) designed for:
receiving a data communication of an accessory device for a vehicle from the communication device of the vehicle via the data communication connection, the data communication originating from the accessory device and being forwarded by the communication device,
determining connection parameters for connecting the accessory device in the vehicle on the basis of the data communication,
transmitting control information for the accessory device to the communication device via the data communication connection, the control information comprising the connection parameters for connecting the accessory device in the vehicle, **characterized by:**
receiving data to be processed of the accessory device from the communication device of the vehicle, the data to be processed comprising sensor data of the accessory device and/or actuator data of the accessory device or for the accessory device,
processing the data to be processed, and
transmitting a processed version of the data to be processed to the communication device of the vehicle via the data communication connection.

## Revendications

1. Procédé permettant d'apparier un appareil accessoire (30) dans un véhicule (100), le procédé comprenant
la réception (110) d'une communication de données provenant de l'appareil accessoire (30) par un appareil de communication (10) du véhicule (100) par l'intermédiaire d'une première liaison de communication de données ;
l'acheminement (120) de la communication de données de l'appareil accessoire (30) par l'appareil de communication (10) vers un serveur (200) par l'intermédiaire d'une seconde liaison de communication de données ;
la réception (130) par l'appareil de communication (10) d'informations de commande pour l'appareil accessoire (30) provenant du serveur (200) par l'intermédiaire de la seconde liaison de communication de données, dans lequel les informations de commande comprennent des paramètres d'appariement pour l'appariement de l'appareil accessoire (30) dans le véhicule (100) ;
l'appariement (140) de l'appareil accessoire (30) dans le véhicule (100); sur la base des informations de commande ; **caractérisé par** :
la réception (150) de données à traiter provenant de l'appareil accessoire (30) par l'intermédiaire de la première liaison de communication de données, dans lequel les données à traiter comprennent des données de capteur de l'appareil accessoire et/ou des données d'action de l'appareil accessoire ou pour l'appareil accessoire ; et
l'acheminement (152) des données à traiter au serveur (200) par l'intermédiaire de la seconde liaison de communication de données afin d'entraîner un traitement des données à traiter par le serveur (200).

2. Procédé selon la revendication 1, comprenant en outre la réception (160) d'une version traitée des données à traiter provenant du serveur (200) par l'intermédiaire de la seconde liaison de communication de données.

3. Procédé selon la revendication 2, comprenant en outre l'acheminement (162) de la version traitée des données à traiter à l'appareil accessoire (30) par l'intermédiaire de la première liaison de communication de données.

4. Procédé selon la revendication 2, comprenant en outre l'utilisation (164) par le véhicule de la version traitée des données à traiter, dans lequel l'utilisation est basée sur les paramètres d'appariement,
et/ou comprenant en outre l'affichage (166) de la version traitée des données à traiter par l'intermédiaire d'une unité d'affichage du véhicule (100),
et/ou comprenant en outre l'acheminement (168) de la version traitée des données à traiter à un autre appareil.

5. Procédé selon l'une des revendications 2 à 4, comprenant en outre la transmission (170) de données de véhicule au serveur (200), dans lequel la version traitée des données à traiter est en outre basée sur les données de véhicule transmises.

6. Procédé selon l'une des revendications précédentes, comprenant la réception (150) de données à traiter provenant de l'appareil accessoire (30) par l'intermédiaire de la première liaison de communication de données, et le traitement (154) des données à traiter par le véhicule (100) sur la base des paramètres d'appariement.

7. Procédé selon la revendication 6, dans lequel le traitement par le véhicule (100) correspond à un prétraitement, comprenant en outre la transmission (156) des données prétraitées à traiter par l'appareil de communication (10) au serveur (200) par l'intermédiaire de la seconde liaison de communication de données afin d'entraîner un traitement des données prétraitées à traiter par le serveur (200), et/ou dans lequel le traitement par le véhicule (100) est basé sur des données de véhicule du véhicule (100).

8. Procédé selon l'une des revendications 1 à 7, dans lequel les paramètres d'appariement comprennent des informations sur les droits d'accès pour l'appareil accessoire (30), dans lequel l'appariement de l'appareil accessoire (30) est basé sur les informations sur les droits d'accès.

9. Procédé selon l'une des revendications 1 à 8, dans lequel le procédé comprend en outre la fourniture (180) d'une fixation et/ou d'une alimentation électrique pour l'appareil accessoire (30), dans lequel la fixation correspond à une fixation magnétique et/ou dans lequel l'alimentation électrique est basée sur un transfert d'énergie par induction.

10. Procédé pour un serveur (200), le procédé comprenant :
la réception (210) d'une communication de données d'un appareil accessoire (30) pour un véhicule (100) provenant d'un appareil de communication (10) du véhicule (100) par l'intermédiaire d'une liaison de communication de données, dans lequel la communication de données provient de l'appareil accessoire (30) et est acheminée par l'appareil de communication (10) ;
la détermination (220) de paramètres d'appariement pour un appariement de l'appareil accessoire (30) dans le véhicule (100) sur la base de la communication de données ; et
la transmission (230) d'informations de commande pour l'appareil accessoire (30) à l'appareil de communication (10) par l'intermédiaire de la liaison de communication de données, dans lequel les informations de commande comprennent les paramètres d'appariement pour l'appariement de l'appareil accessoire (30) dans le véhicule (100) ; **caractérisé par** :
la réception (240) de données à traiter de l'appareil accessoire (30) provenant de l'appareil de communication (10) du véhicule (100), dans lequel les données à traiter comprennent des données de capteur de l'appareil accessoire et/ou des données d'action de l'appareil accessoire ou pour l'appareil accessoire ;
le traitement (250) des données à traiter ; et
la transmission (260) d'une version traitée des données à traiter à l'appareil de communication (10) du véhicule (100) par l'intermédiaire de la liaison de communication de données.

11. Procédé selon la revendication 10, comprenant en outre la réception (270) de données de véhicule du véhicule (100) provenant de l'appareil de communication (10), dans lequel le traitement (250) des données à traiter est basé sur les données de véhicule.

12. Programme comportant un code de programme permettant de mettre en œuvre au moins l'un des procédés selon l'une des revendications 1 à 11, lorsque le code de programme est exécuté sur un ordinateur, un processeur, un module de commande ou un composant matériel programmable.

13. Appareil de communication (10) pour un véhicule (100), comprenant :
une première interface (12) pour la communication de données avec un appareil accessoire (30) pour le véhicule (100) par l'intermédiaire d'une première liaison de communication de données ;
une seconde interface (14) pour la communication de données avec un serveur (200) par l'intermédiaire d'une seconde liaison de communication de données ; et
un module de commande (16) conçu pour :
recevoir une communication de données provenant de l'appareil accessoire (30) par l'intermédiaire de la première interface (12),
transmettre la communication de données de l'appareil accessoire (30) au serveur (200) par l'intermédiaire de la seconde interface (14),
recevoir des informations de commande pour l'appareil accessoire (30) provenant du serveur (200) par l'intermédiaire de la seconde interface (14), dans lequel les informations de commande comprennent des paramètres d'appariement pour l'appariement de l'appareil accessoire (30) dans le véhicule (100), et
utiliser les paramètres d'appariement pour apparier (100) l'appareil accessoire (30) au véhicule (100) ; **caractérisé par :**
la réception (150) de données à traiter provenant de l'appareil accessoire (30) par l'intermédiaire de la première interface, dans lequel les données à traiter comprennent des données de capteur de l'appareil accessoire et/ou des données d'action de l'appareil accessoire ou pour l'appareil accessoire ; et
l'acheminement (152) des données à traiter au serveur (200) par l'intermédiaire de la seconde interface afin d'entraîner un traitement des données à traiter par le serveur (200).

14. Dispositif pour un serveur, comprenant :
une interface (22) permettant de communiquer avec un appareil de communication d'un véhicule par l'intermédiaire d'une liaison de communication de données ; et
un module de commande (24) conçu pour :
recevoir une communication de données d'un appareil accessoire pour un véhicule provenant de l'appareil de communication du véhicule par l'intermédiaire de la liaison de communication de données, dans lequel la communication de données provient de l'appareil accessoire et est acheminée par l'appareil de communication,
déterminer des paramètres d'appariement pour un appariement de l'appareil accessoire dans le véhicule sur la base de la communication de données,
transmettre des informations de commande pour l'appareil accessoire à l'appareil de communication par l'intermédiaire de la liaison de communication de données, dans lequel les informations de commande comprennent les paramètres d'appariement pour l'appariement de l'appareil accessoire dans le véhicule, **caractérisé par** :
la réception de données à traiter de l'appareil accessoire provenant de l'appareil de communication du véhicule, dans lequel les données à traiter comprennent des données de capteur de l'appareil accessoire et/ou des données d'action de l'appareil accessoire ou pour l'appareil accessoire,
le traitement des données à traiter, et
la transmission d'une version traitée des données à traiter à l'appareil de communication du véhicule par l'intermédiaire de la liaison de communication de données.
